# EUROPEAN PATENT SPECIFICATION

(11) **EP 1 640 254 B1**
(45) Date of publication and mention of the grant of the patent: **10.09.2008**
(21) Application number: 04746100.9
(22) Date of filing: 18.06.2004
(51) Int. Cl.: B62D 55/253

(54) **RUBBER TRACK AND METHOD OF PRODUCING CORE METAL FOR RUBBER TRACK**
KAUTSCHUKBAHN UND VERFAHREN ZUR HERSTELLUNG VON KERNMETALL FÜR KAUTSCHUKBAHN
CHENILLE EN CAOUTCHOUC ET PROCEDE DE FABRICATION D'UN NOYAU METALLIQUE DESTINE A CETTE CHENILLE

(30) Priority: 02.07.2003 JP 2003270391
(43) Date of publication of application: 29.03.2006
(73) Proprietor: Fukuyama Gomu Kogyo Kabushiki Kaisha, Fukuyama-shi, Hiroshima-ken 720-0802 (JP)
(72) Inventor: KATO, Yusaku c/o Fukuyama Gomu Kogyo Kabushiki Kaisha, Fukuyama-shi, Hiroshima720-0802 (JP); UCHIYAMA, Tsuyoshi c/o Fukuyama Gomu Kogyo Kabushiki Kaisha, Fukuyama-shi, Hiroshima 720-0802 (JP); NORITO, Tatsuya c/o Fukuyama Gomu Kogyo Kabushiki Kaisha, Fukuyama-shi, Hiroshima 720-0802 (JP)
(74) Representative: Kramer - Barske - Schmidtchen
(86) International application number: PCT/JP2004/008598
(87) International publication number: WO 2005/002952

(56) References cited:
- EP-A- 0 638 472
- JP-A- 5 058 357
- JP-A- 5 162 666
- JP-A- 6 087 473
- JP-A- 8 301 155
- JP-Y2- 2 601 638
- PATENT ABSTRACTS OF JAPAN vol. 018, no. 348 (M-1630), 30 June 1994 (1994-06-30) -& JP 06 087473 A (BRIDGESTONE CORP), 29 March 1994 (1994-03-29)
- PATENT ABSTRACTS OF JAPAN vol. 017, no. 370 (M-1444), 13 July 1993 (1993-07-13) -& JP 05 058357 A (BRIDGESTONE CORP), 9 March 1993 (1993-03-09)

## Description

### TECHNICAL FIELD

The present invention relates to a rubber crawler track mounted on an endless track traveling device, which is used in mobile construction machines, civil working vehicles, farm working machines, and industrial vehicles such as transportation vehicles.

### TECHNICAL BACKGROUND

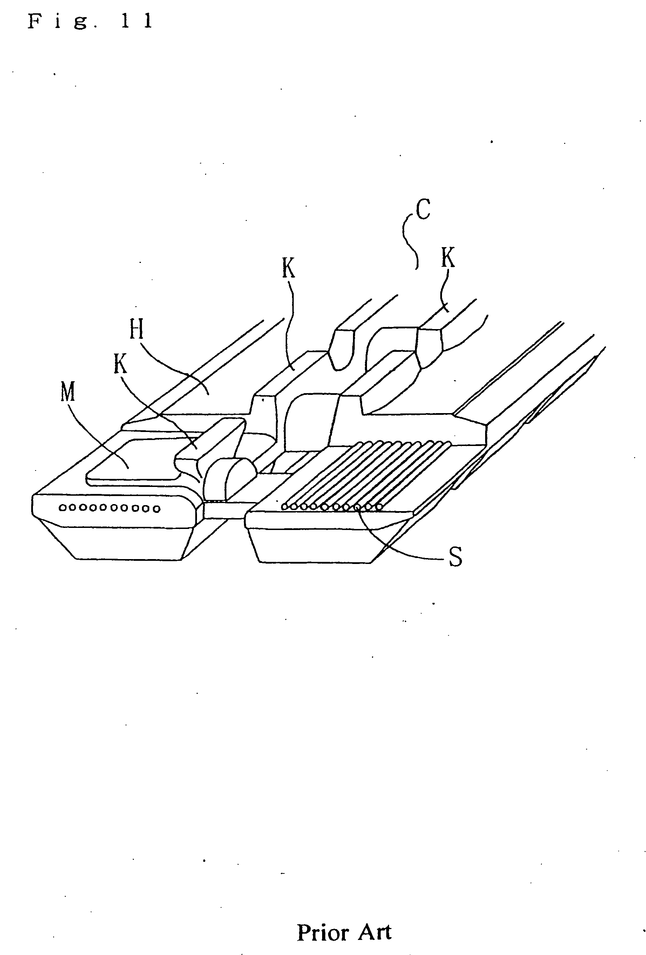

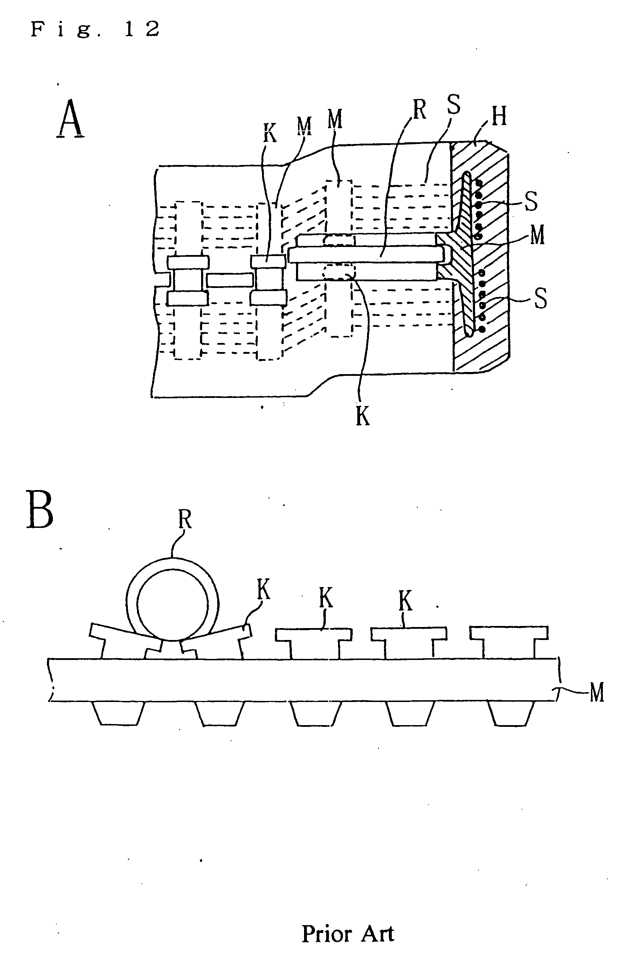

Fig. 11 shows a conventional rubber crawler track C. Steel cords S are embedded in a rubber crawler body shaped as an endless belt out of rubber elastic body as a circumferential reinforcing member and metallic core metals M are embedded therein as a width directional reinforcing member. K is a guide protrusion for guiding a rolling wheel.
In the conventional rubber crawler track, as shown in Fig. 12A, side displacement occurs between adjacent core metals. Because of the side displacement, a rolling wheel R of a crawler traveling device goes across the guide protrusion K to run off, and the rubber crawler track comes to get out of the traveling device.
In addition, the conventional rubber crawler track is so constructed, as shown in Fig. 12B, that the rolling wheel R rolls on the guide protrusions K. Therefore, the rolling wheel R rolls on the guide protrusions K, collapsing between the core metals adjoining longitudinally in a circumferential direction to increase traveling vibration. To solve this problem, a rubber crawler track for reducing the collapse of the rolling wheel has been proposed. Therein, a rolling face of the guide protrusion is extended circumferentially, the guide protrusion is shaped in T letter, and a distance between the core metals is shortened. However, as to even this structure, the core metals incline and the rolling wheels collapse after all.

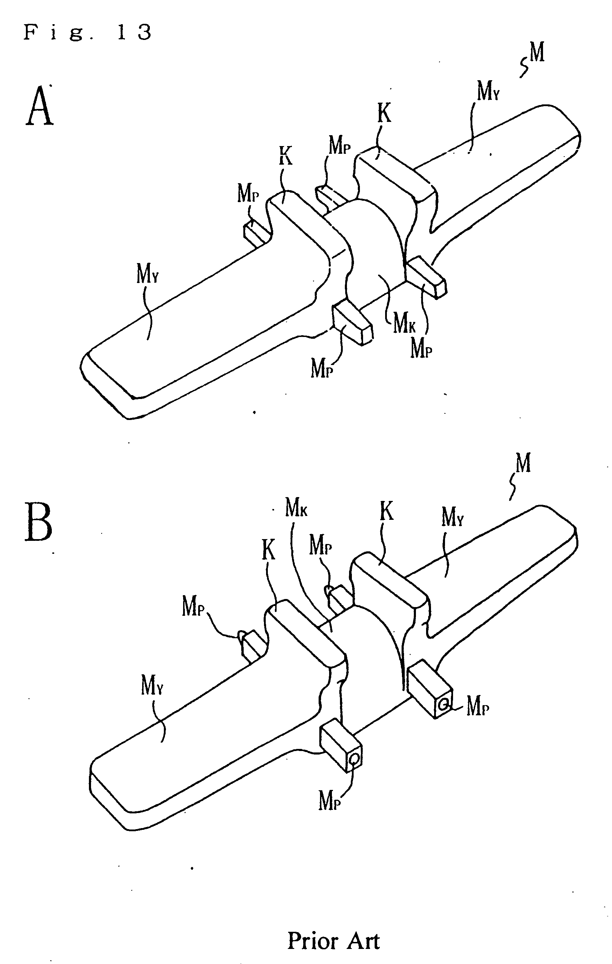

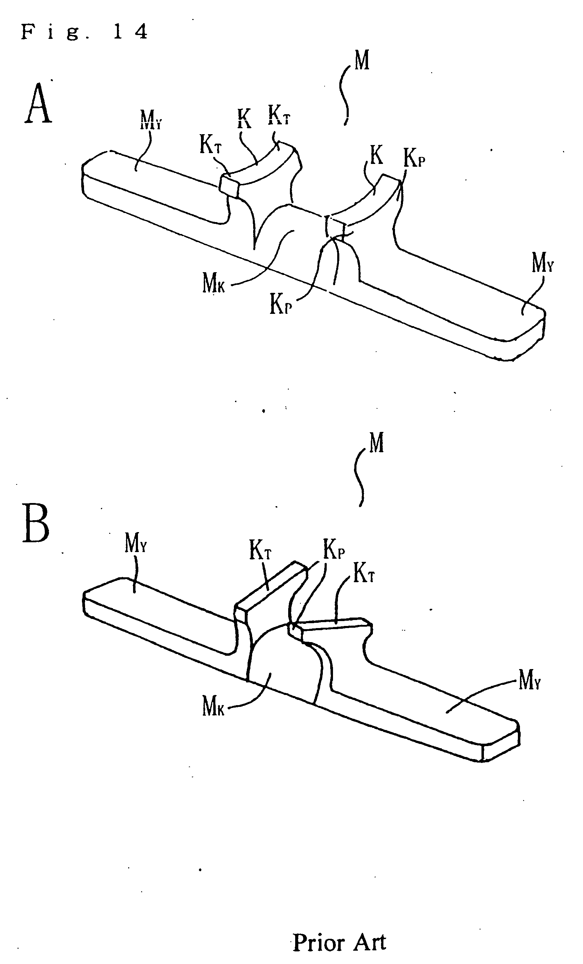

This applicant has already proposed an invention disclosed in Japanese utility model registration No. 2551937 to prevent wheel run-off caused by the side displacement in the rolling wheel. This invention is to prevent the side displacement of the rubber crawler tack and the wheel run-off by arranging horizontal protrusions MP to a core metal M. (See Fig. 13A, MY is a core metal wing portion.)
In addition, the applicant has proposed an invention disclosed in Japanese patent No. 2554552 and Japanese utility model publication No. 000226 of 1996 to prevent traveling vibration due to the collapse of the rolling wheel and an inclination of the core metal. In this invention, the top of the guide protrusion K forms an inclination KT to form a continuous rolling wheel track and reduce the vibration. That is, when the rolling wheel R gets on guide protrusion overhangs KP, the overhangs KP gravitate somewhat to keep the height of track of the rolling wheel and approach to the guide protrusion K of the adjacent core metal M to reduce the distance between the core metals. (See Fig. 14, MK is an engaging portion of the core metal.)

Moreover, the applicant has proposed an invention disclosed in Japanese utility model registration No. 2601638 to settle the following problems.
Problem 1:
When the rolling wheel travels on the guide protrusions of the rubber crawler track, an external force such as a rolling wheel load is added on crawler circumferential ends of the guide protrusion top. According to this, the guide protrusion inclines, the rolling wheel collapses, and the traveling vibration occurs.
**Problem 2:**
The core metal falls off from the rubber crawler track at a stroke due to the external force like pushing up from the side of the guide protrusion, caused by an interaction between the crawler track and the traveling device. Here, the interaction is caused by pushing stones between the guide protrusions or by the discrepancy of the traveling device. In this case, sometimes, an adhesion between the rubber and the core metal is peeled.
In the invention of Japanese utility model registration No. 2601638, the horizontal protrusions MP are formed within the thickness of the wing portion of the core metal embedded in the rubber crawler track or below it so as to cross perpendicular to the side plane of the core metal. When the core metal is embedded in the rubber crawler body, the horizontal protrusions MP between the adjacent core metals are embedded so as to overlap in a crawler width direction (lateral direction) and in a crawler thickness direction (vertical direction). Therefore, a local side displacement of the rubber crawler track and vibration of the core metal are prevented, thereby preventing the crawler run-off, the rolling wheel collapse, and the core metal peel-off. (See Fig. 13B)
Patent literature 1: Japanese utility model registration No. 2551937
Patent literature 2: Japanese utility model registration No. 2601638
Patent literature 3: Japanese patent No. 2554552
Patent literature 4: Japanese utility model publication No. 000226 of 1996

### SUMMARY OF THE INVENTION

### PROBLEM TO BE SOLVED BY THE INVENTION

The rubber crawler track in Japanese utility model registration No. 2601638 can solve the following conventional problems.
(1) The problem, which the side displacement occurs between the adjacent core metals, the rolling wheel of the crawler driving device goes across the guide protrusion of the core metal to run off, and the rubber crawler track gets out of the driving device.
(2) The problem, which the traveling vibration is increased by the collapse between the adjacent core metals of the rolling wheel and by the inclination of the core metal.
(3) The problem, which the core metal falls off from the rubber crawler track due to the vibration.
   However, this horizontal protrusion has only small section modulus, and therefore, there is an uneasiness in the strength of protrusion.

In addition, the conventional rubber crawler track has the following problems.
Generally, a rubber crawler track transmits a driving force from the driving device to the rubber crawler track as engaging sprocket teeth of the driving device to the engaging portion of the core metal.
When transmitting the driving force to the core metal, there occurs adhesive fatigue on a shearing face between the core metal and a steel cord layer, and the core metal falls off. This problem needs preventing effectively.

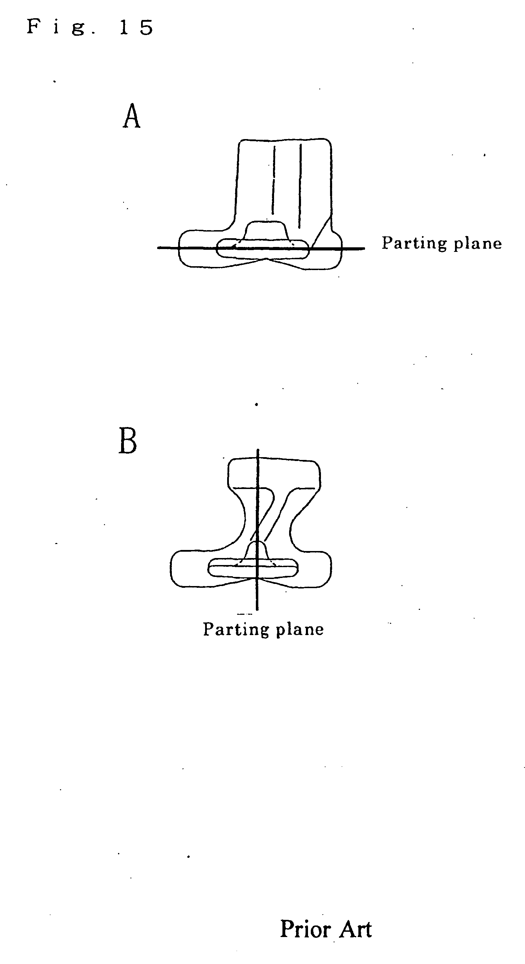

In addition, it is impossible to apply a structure for improving the traveling vibration, which is disclosed in Japanese patent No. 2554552 or Japanese utility model publication No. 000226 of 1996, to the core metal having horizontal protrusions disclosed in Japanese utility model registration No. 2601638. Because a mold shape for producing core metals is restricted.
In molding the core metals of Fig. 14, which have the structure disclosed in Japanese patent No. 2554552 or Japanese utility model publication No. 000226 of 1996, a parting plane of the mold must be formed at a line position in Fig. 15A so as to part vertically. However, in molding the core metals for improving the wheel run-off, which is disclosed in Japanese utility model registration No. 2601638, the parting plane must be formed at a line position in Fig. 15B so as to part laterally on forming the horizontal protrusions. Therefore, the guide protrusion top at the center of the core metal becomes the most high because a trimming taper is formed. Consequently, the traveling vibration is increased.
EP 0638472 A1 and JP 05058357 disclose a rubber crawler track having a rubber crawler body which is shaped as an endless belt made of a rubber elastic body. Steel cords are embedded in the rubber crawler body and core metals are also embedded in the rubber crawler body at a fixed interval in a crawler circumferential direction. The core metals comprise horizontal protrusions formed to side planes of the core metal in a width direction of at least one of both sides of the core metal. The guide protrusions have at their tips dimples and caves, such that a dimple of one core metal is inserted into a dimple of an adjacent core metal when the rubber crawler track is assembled.
JP 06087473, which forms the preamble of claim 1, discloses a rubber crawler track which includes core metals embedded in the rubber crawler body at fixed intervals in a crawler circumferential direction. An engaging portion is formed at the centre of a core metal length direction and guide protrusions enclose this engaging portion at both ends in the length direction of the core metal. Further, horizontal protrusions are provided which are formed to side planes of the core metal in a width direction of at least one of the both sides of the engaging portion. The horizontal protrusions facing between adjacent core metals in the crawler circumferential direction overlap within a fixed length of the ends in a crawler width direction, a crawler thickness direction and the crawler circumferential direction.
The present invention aims to solve the above-mentioned problems and provide a rubber crawler track in which a local side displacement is more effectively prevented to effectively prevent wheel run-off, which can improve traveling vibration, and in which separation of a core metal is prevented for improved durability of the rubber crawler track and for reduced costs.

### MEANS TO SOLVE THE PROBLEM

The present invention is achieved for the above-mentioned aims.
Generally, a rubber crawler track comprises an endless belt-shaped rubber crawler body made of rubber elastic body and the like, many steel cords stratifiedly embedded therein, and core metals embedded at a fixed interval in a crawler circumferential direction.
A core metal used in the present invention is provided with horizontal protrusions. The horizontal protrusions are provided to side planes of the core metal in the width direction of at least one of both sides of an engaging portion of the core metal where are within the thickness of core metal wing portions in the vertical direction and an area of tread side below than the thickness. When the core metals are embedded in the rubber crawler body, ends of horizontal protrusions facing each other between adjacent core metals in the circumferential direction overlap in a crawler width direction and in a crawler thickness direction within a fixed length.
A feature of the invention is to express a distance "r" between the ends of the horizontal protrusions in the crawler circumferential direction as Δ r≦r≦2 Δ r. In this case, the rubber crawler track is horizontal.
Here, Δ r is obtained by Δ r= 2 π h/n where "h" is a distance from a steel cord layer to the horizontal protrusion, and "n" is the number of the sprocket teeth of the traveling device.
Accordingly, the distance "r" is expressed as 2 π h/n≦r≦4 π h/n.

Preferably, a tapered horn portion can be formed to an end of one of the horizontal protrusions facing between the adjacent core metals.

Preferably, a parting plane of a mold for producing core metals is shift left and right from the center at guide protrusion sides due to shifting left and right guide protrusions of the crawler width direction of the core metals longitudinally in the crawler circumferential direction so as to shift the highest positions of the guide protrusions longitudinally in the crawler circumferential direction from the center of the core metals.

### EFFECT OF INVENTION

According to the above-mentioned first feature, a shearing force transmitted from a sprocket is dispersed, thereby preventing the core metal from separating from the rubber crawler track. In addition, it is possible to reduce the shearing area between the core metal and the steel cords and reduce the cost.

In addition, according to the above-mentioned third feature, the height of the guide protrusion top on the center line in a crawler longitudinal direction of the core metal can be lowered so as to shape a rolling contact surface of the rolling wheel with the left and right guide protrusions of the core metal longitudinal direction. Therefore, the traveling vibration can be effectively prevented. Hence, it is possible to prevent the traveling vibration in even the core metals with the horizontal protrusions.

### BRIEF EXAMINATION OF THE DRAWINGS

[Fig. 1] This shows a core metal to be embedded in a rubber crawler body, Fig. 1A is a front view, Fig. 1B is a side view, and Fig. 1C is a plane view of an anti-tread side of a core metal embedded in a rubber crawler track.
   (The first embodiment)
[Fig. 2]This is a perspective view of the core metal to be embedded in the rubber crawler body. (The first embodiment)
[Fig. 3] This shows the rubber crawler track, Fig. 3A is a plane view of the anti-tread side, Fig. 3B is a sectional view taken along X-X line of Fig. 3A, and Fig. 3C is a side view of Fig. 3A. (The first embodiment)
[Fig. 4] This is a view for explaining the horizontal protrusions between the adjacent core metals embedded in the rubber crawler body. Fig. 4A is an explanation view of the side plane of the adjacent core metals while the crawler track contacts on the ground (in a horizontal state). Fig. 4B is an explanation view thereof while the crawler track is wound up to an idler-sprocket of the traveling device. (The first embodiment)
[Fig. 5] This is a view for explaining the horizontal protrusions between the adjacent core metals embedded in the rubber crawler body. Fig. 5A is an explanation view of the side plane showing the relation of the adjacent core metals while the crawler track contacts on the ground (in a horizontal state). Fig. 5B is an explanation view of the side plane showing the relation of the adjacent core metals while the crawler track is wound up to the idler-sprocket of the traveling device. (An another embodiment of the first embodiment)
[Fig. 6] This is a graph view showing a ratio of load for the sprocket teeth in transmitting traction capacity from the sprocket to the rubber crawler track.
[Fig. 7] This is an explanation view of a core metal for showing a parting plane of a mold for producing the core metal. Fig. 7A is a plane view of the anti-tread side of the core metal embedded in the rubber crawler track, Fig. 7B is a side view and Fig. 7C is a plane view of the tread side. (The first embodiment)
[Fig. 8] This is a graph view showing the rolling-wheel sinkage of a core metal whose guide protrusion top forms a trimming taper from the center, produced by a conventional laterally parting mold and a core metal whose guide protrusion is shifted in the crawler circumferential direction and whose parting plane is shifted at the guide protrusion side in the present invention. (The first embodiment)
[Fig. 9] This shows a core metal to be embedded in the rubber crawler body, Fig. 9A is a plane view of the anti-tread side and Fig. 9B is a side view. (The second embodiment)
[Fig. 10] This is a view for explaining the horizontal protrusions between the adjacent core metals embedded in the rubber crawler body. Fig. 10A is an explanation view of the side plane showing the relation of the adjacent core metals while the crawler track contacts on the ground (in a horizontal state). Fig. 10B is an explanation view of the side plane showing the relation of the adjacent core metals while the crawler track is wound up to the idler-sprocket of the traveling device. (The second embodiment)
[Fig. 11] This is a partly sectional fragmentary perspective view of the rubber crawler track. (Conventional embodiment)
[Fig. 12] This is a view for explaining troubles of the rubber crawler track. Fig. 12A is a plane view for explaining a trouble that the rubber crawler track gets out of the traveling device. Fig. 12B is a side view for explaining a trouble that traveling vibration of the rubber crawler track loudens.
   (Conventional embodiment)
[Fig. 13] Fig. 13A and Fig. 13B are perspective views of the conventional core metals to settle the troubles of the rubber crawler track.
   (Conventional embodiment)
[Fig. 14] Fig. 14A and Fig. 14B are perspective views of the conventional core metals to settle the troubles of the rubber crawler track.
   (Conventional embodiment)
[Fig. 15] This is a side view of the core metal for explaining a parting plane of the conventional mold. (Conventional embodiment)

### EXPLANATION OF REFERENCE MARKS

- 1: a rubber crawler track
- 2: a rubber crawler body
- 3, 3': a core metal
- 3a, 3a': a core metal engaging portion
- 3b, 3b': a core metal guide protrusion
- 3c, 3c': a core metal wing portion
- 4: a lug
- 5: a steel cord
- 6: a core metal horizontal protrusion
- C: a conventional rubber crawler track
- H: a conventional rubber crawler body
- M: a conventional core metal
- MY: a conventional core metal wing portion
- MK: a conventional core metal engaging portion
- K: a conventional core metal guide protrusion
- KP: a conventional core metal guide protrusion buckling portion
- KT: a conventional core metal guide protrusion slope
- R: a rolling wheel
- S: a steel cord

### PREFERRED EMBODIMENTS OF THE INVENTION

A rubber crawler track comprises an endless belt-shaped rubber crawler body made of rubber elastic body, many steel cords and core metals. The steel cords are embedded in the rubber crawler body so as to form a layer. The core metals are embedded at a fixed interval in a circumferential direction of the rubber crawler track, each comprising an engaging portion, guide protrusions for preventing wheel run-off, wing portions and horizontal protrusions. The engaging portion is formed at the center of the length of a core metal, and the guide protrusions and the wing portions are respectively formed to both sides of the engaging portion. The horizontal protrusions are provided to side planes of the core metal in the width direction of at least one of both sides of the engaging portion where are within the thickness of core metal wing portions in the vertical direction and an area of tread side below than the thickness. When the horizontal protrusions are embedded in the rubber crawler body, they face each other between the adjacent core metals in the crawler circumferential direction. And the ends of the horizontal protrusions overlap in a crawler width direction and in a crawler thickness direction within the fixed length. In this case, a distance "r", in the circumferential direction of the rubber crawler track, between the ends of the horizontal protrusions facing each other between the adjacent core metals is expressed as Δ r≦r≦2 Δ r. In this case, the rubber crawler track is horizontal.
Δ r is calculated by Δ r=2 π h/n ("h" is a distance from a steel code layer embedded in the rubber crawler body to the horizontal core metal, and "n" is the number of sprocket teeth of the driving device).
Accordingly, when the rubber crawler track is engaged with the sprocket, there comes to be no space between the ends of the horizontal protrusions of the adjacent core metals. Therefore, the shearing force participated when the driving force is transmitted from the sprocket teeth to the core metal engaging portion does not concentrate on a core metal but disperses to the adjacent core metals through the horizontal protrusions. The shearing force is to be dispersed to a next core metal through the horizontal protrusions one after another. Therefore, the core metals are prevented from separating from the rubber crawler track.
In addition, it is possible to reduce the shearing area between the core metals and the steel cords, and reduce the cost.

Moreover, in the present invention, an end of the horizontal protrusion of one side of longitudinal ones in the crawler circumferential direction (in the core metal width direction) may have a tapered horn portion. When the core metals are embedded in the rubber crawler body, the ends of the horizontal protrusions overlap within the fixed length in the crawler width direction and in the crawler thickness direction in the state that one of them facing between the adjacent core metals has the horn portion and the other has none.
Therefore, when the crawler is wound up to the idler or the sprocket, the horizontal protrusions do not interfere with the core metals, and therefore, the distance from the horn portion to the adjacent core metal is reduced so that the crawler track contacts on the ground (in horizontal state). Therefore, the distance that the horizontal protrusions overlap between the adjacent core metals is increased, and the overlapping state can be effectively maintained. Accordingly, crawler departure is effectively prevented.
Besides, when the distance "r" is within Δ r≦r≦2 Δ r, there is no space between the ends of the horizontal protrusions between the adjacent core metals in the state the rubber crawler track is wound up on the idler sprocket. The shearing force participated when the driving force is transmitted from the sprocket teeth to the core metal engaging portion does not concentrate on a core metal but disperses to the adjacent core metal through the horizontal protrusions. The shearing force is dispersed to the next core metal through the horizontal protrusions one after another. Therefore, the core metals are prevented from separating from the rubber crawler track.

Furthermore, left and right guide protrusions in the crawler width (core metal longitudinal) direction of the core metal are shifted longitudinally in the crawler circumferential (core metal width) direction, and the highest position is shifted longitudinally from the center of the core metal. Therefore, when the core metals are embedded in the rubber crawler track, the guide protrusions are arranged in zigzag. Accordingly, the parting plane of the mold is shifted laterally from the center of the core metal at the guide protrusion side.
Generally, producing the core metal with the complicated-shaped horizontal protrusions needs to form the parting plane of the mold so as to part laterally because a trimming taper needs to be formed to extract the core metal from the mold. On the contrary, producing the core metal disclosed in Japanese patent No. 2554552 and Japanese utility model publication No. 000226 of 1996 needs to form the parting plane so as to part vertically with relations between the shape of the guide protrusion top and the trimming taper of the parting plane. Accordingly, it is impossible to adopt the shape of the guide protrusion disclosed in Japanese patent No. 2554552 and Japanese utility model publication No. 000226 of 1996 to the core metal with horizontal protrusions because of restriction on producing. Therefore, the parting plane of the mold must be parted laterally for the core metal with the horizontal protrusions, and therefore, the guide protrusion top is the most highest at the center of the core metal and the traveling vibration is increased.
The height of the guide protrusion top can be lowered on the center line of the crawler longitudinal direction of the core metal by shifting the left and right guide protrusions in the crawler width direction longitudinally in the crawler circumferential direction and laterally shifting the parting plane of the mold at the guide protrusion side. In this case, the traveling vibration due to the shape of the rolling face disclosed in Japanese patent No. 2554552 and Japanese utility model publication No. 000226 of 1996 can be effectively prevented. Accordingly, even core metal with the horizontal protrusions can prevent the traveling vibration.

Besides, as to the shape of the horizontal protrusions, it is desirable that one of the horizontal protrusions of the adjacent core metals in the crawler circumferential direction is shaped as an L letter and the other is shaped as a converse L letter.
Therefore, the overlap portions of the horizontal protrusions facing between the adjacent core metals in the crawler circumferential direction are positioned near the steel cord layer of a bending center of the rubber crawler track. Accordingly, the crawler coming-off can be effectively prevented. Besides, when the idler and the sprocket winds and reversely bend, cracks occur on rubber portion of the rubber crawler track because the horizontal protrusions mutually shift at the overlap portion. However, the rubber crawler track can be prevented from being damaged by spread of the cracks.
In addition, the section modulus can be enlarged more than the usual case due to the horizontal protrusion shaped as an L letter, thereby increasing the strength.

### EXAMPLE 1

The present invention is explained with reference to the figures as the following in detail.

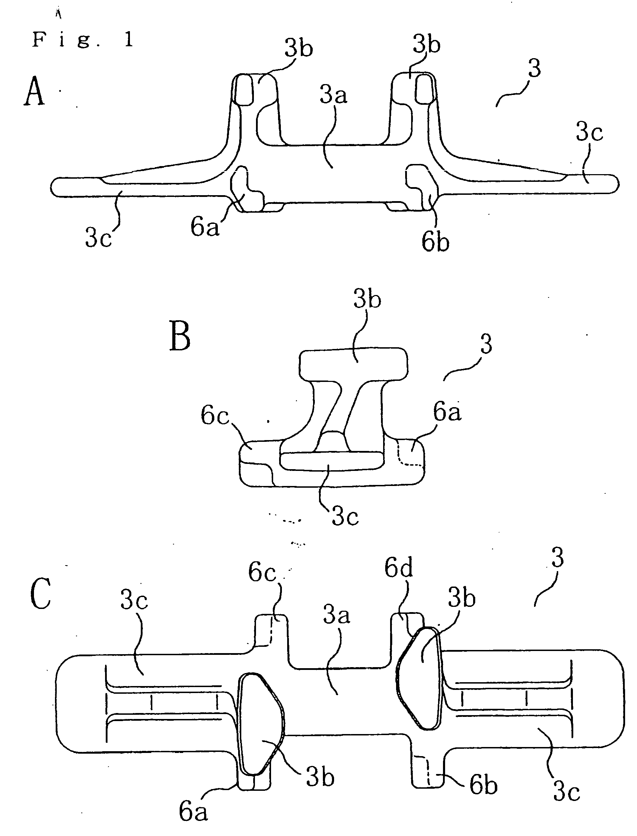

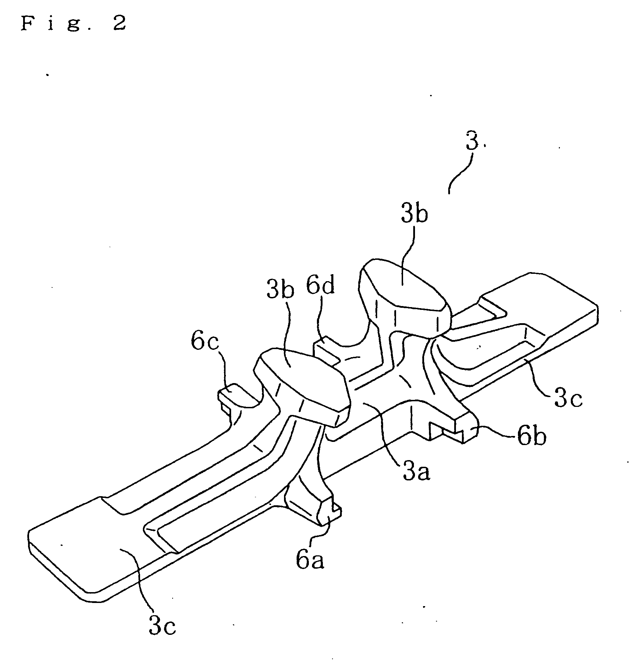

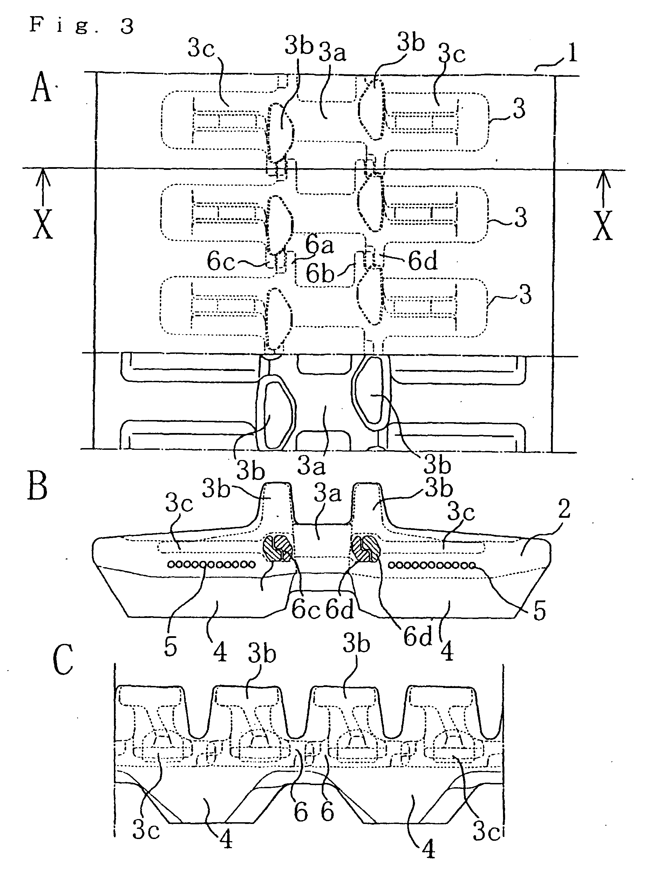

Fig. 1 shows a core metal 3 embedded in a rubber crawler body 2 of a rubber crawler track 1 in the first embodiment. Fig. 1A is a front view, Fig. 1B is a side view, and Fig. 1C is a plane view of the anti-tread side of the core metal 3 embedded in the rubber crawler track. Fig. 2 is a perspective view of the core metal 3. Fig. 3 shows the rubber crawler track 1 in the first embodiment. Fig. 3A is a plane view of the anti-tread side, Fig. 3B is a sectional view taken along X-X of Fig. 3A, and Fig. 3C is a side view of Fig. 3A.
The rubber crawler track 1 comprises the rubber crawler body 2 of an endless belt body formed by rubber elastic body, the core metals 3, lugs 4 and steel cord 5 rows. The core metals 3 are embedded in the rubber crawler body 2 at a fixed interval in the crawler circumferential direction. The lugs 4 protrude from the tread side of the rubber crawler track 1. The steel cord 5 rows are so formed that many steel cords 5 are divided to left and right of core metal engaging portions 3a for engaging with a driving wheel of a travelling device and embedded as a layer in the crawler circumferential direction on the outer periphery of the core metals 3.

The core metal 3 comprises an engaging portion 3a, guide protrusions 3b for preventing wheel run-off, left and right wing portions 3c and horizontal protrusions 6. The engaging portion 3a is provided to the center of the length direction of the core metal. The guide protrusions 3a and the wing portions 3c are provided to both sides of the engaging portion 3a. The horizontal protrusions 6 are provided to the side planes of the core metal in the width direction of at least one of both sides of the engaging portion 3a where are within the thickness of the wing portion in the vertical direction and the anti-tread side portion below than the thickness.
The horizontal protrusions 6 facing between the adjacent core metals in the crawler circumferential direction of the first embodiment are overlapped within the fixed length in the crawler width direction and in the crawler thickness direction of the core metal 3. As for the shape of the horizontal protrusion 6, a horizontal protrusion 6a of one side (left side in Fig. 1A) in the core metal longitudinal direction is shaped as an L letter, and a horizontal protrusion 6b in the other side (right side in Fig. 1A) is shaped as a converse L letter. In the core metal width direction, the distance between the left and right horizontal protrusions (the distance 6c-6d) in the core metal longitudinal direction of one side is fitted to the distance between the left and right horizontal protrusions (the distance 6a-6b) in the core metal longitudinal direction of the other side. In addition, as for the shape of the left and right core metals in the core metal width direction, the horizontal protrusion 6a of the one side (downside of Fig. 1C) is shaped as an L letter, and a horizontal protrusion 6c of the other side (upside of Fig. 1C) is shaped as a converse L letter.

Accordingly, the overlap of the horizontal protrusions facing between the adjacent core metals in the crawler width direction is not varied much in winding or conversely bending the idler and the sprocket, thereby preventing side displacement suitably. In addition, the rubber portion at the horizontal protrusions is prevented from cracks. Therefore, the rubber crawler track can improve in durability.
In addition, the horizontal protrusions are so constructed that ones facing between the adjacent core metals overlap in the crawler width direction and in the crawler thickness direction when they are embedded in the rubber crawler body. Accordingly, the crawler track can be prevented from twisting in addition to the side displacement and core metal separation due to the outer power. Besides, although the overlap against the twist of the horizontal protrusions facing at one place forms only one side (such as clockwise), the overlap due to the facing horizontal protrusion is opposite side (anti-clockwise). Accordingly, the crawler track can be prevented from twisting synthetically.

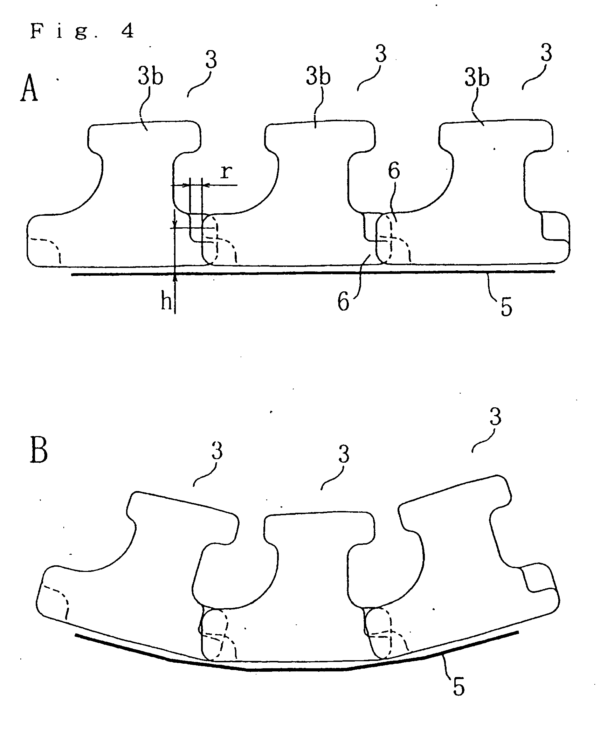

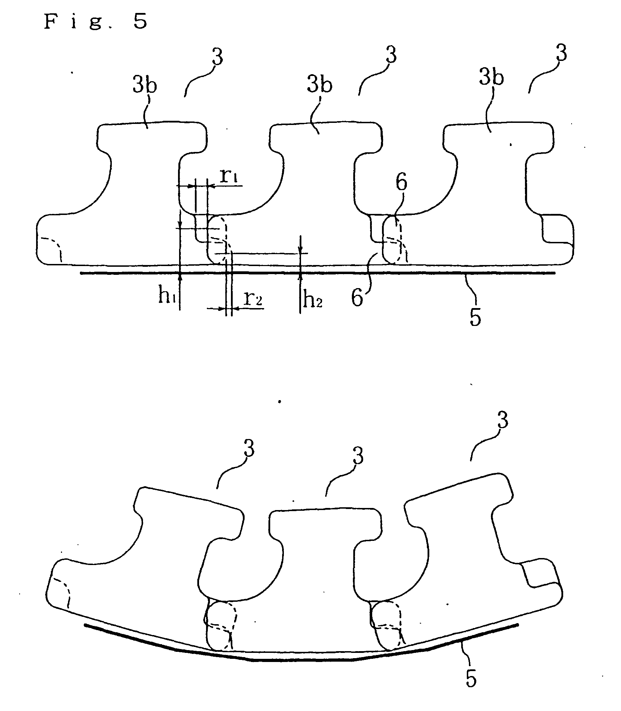

Fig. 4 is a view for explaining the horizontal protrusions between the adjacent core metals 3 embedded in the rubber crawler body 2 in the first embodiment. Fig. 4A is an explanation view of a side plane of the adjacent core metals while the crawler track contacts on the ground (in a horizontal state). Fig. 4B is an explanation view of the side plane of the adjacent core metals while the crawler track is wound up to the idler and the sprocket of the traveling device.
A distance "r" in the first embodiment is 1.6mm (Δ r). (The distance from the steel cord 5 layer embedded in the rubber crawler body to the horizontal protrusion; 6mm, the number of teeth of the sprocket of the traveling device; 23, Δ r=2×3.14×6/23= 1.64mm)
In this case, since the rubber crawler track is usually produced through a pressure-hot forming in straight, there exists rubber between the end of the horizontal protrusion and the adjacent core metal. Therefore, in consideration of compressive degree, it is preferable that the distance "r" is set from Δ r to 2 Δ r longer than Δ r. Here, Δ r is the distance from the end of the horizontal protrusion to the adjacent core metal, being essentially 0 when the rubber crawler track is wound up to the sprocket-winding portion. (In the first embodiment, "r" is from 1.6mm to 3.2mm.)
When setting a distance r1 from the end of the horizontal protrusion to the adjacent core metal between the core metals adjoining at the anti-tread side and a distance r2 of the tread side from Δ r to 2 Δ r as shown in Fig. 5, these distances become effectively-essentially 0 when the rubber crawler track is wound up to the sprocket-winding portion.

The distance between the core metal and the end of the horizontal protrusion between the adjacent core metals essentially loses when the rubber crawler track is wound up to the sprocket-winding portion. According to this, the shearing force occurring when the driving force is transmitted from the sprocket teeth to the core metal engaging portion is dispersed to the adjacent core metal through the end of the horizontal protrusion. Therefore, the core metals are prevented from separating from the rubber crawler body.

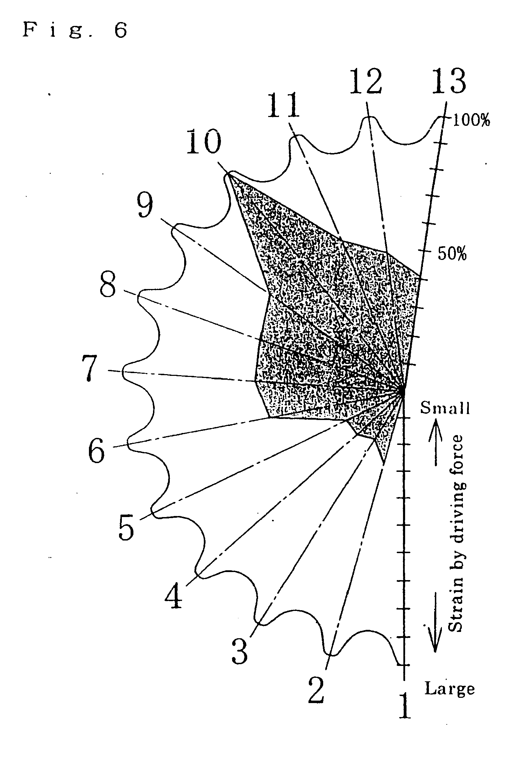

Fig. 6 is a graph view showing a ratio of load for each tooth of the sprocket when traction capacity is transmitted from the sprocket to the rubber crawler track.
As shown in Fig. 6, a tractive force is not transmitted equally to the rubber crawler track from the teeth of the sprocket. The tooth of No. 10 shows the maximum shearing ratio, namely, the tractive force is to be concentratively transmitted to the rubber crawler from a part of the teeth.
Accordingly, the shearing force caused by the tractive force (the driving force), which is concentratively transmitted from a part of the sprocket teeth to the core metal engaging portion, is dispersed from the core metal receiving the tractive force to the adjacent core metal through the end of the horizontal protrusion by essentially losing the distance from the end of the horizontal protrusion to the core metal when winding the rubber crawler track up to the sprocket-winding portion. The shearing force is further dispersed to the next core metal in order. Therefore, the core metal can be prevented from separating from the rubber crawler body.
In addition, when the driving force is transmitted from the sprocket teeth to the core metal engaging portion, a separating force of the core metal in a crawler inner peripheral direction can be dispersed to the adjacent core metals by the overlap in the crawler thickness direction of the horizontal protrusion at same time. Accordingly, the core metal can remarkably keep the durability of the adhesive surface, thereby reducing the shearing area between the core metal and the steel cords, and costs.

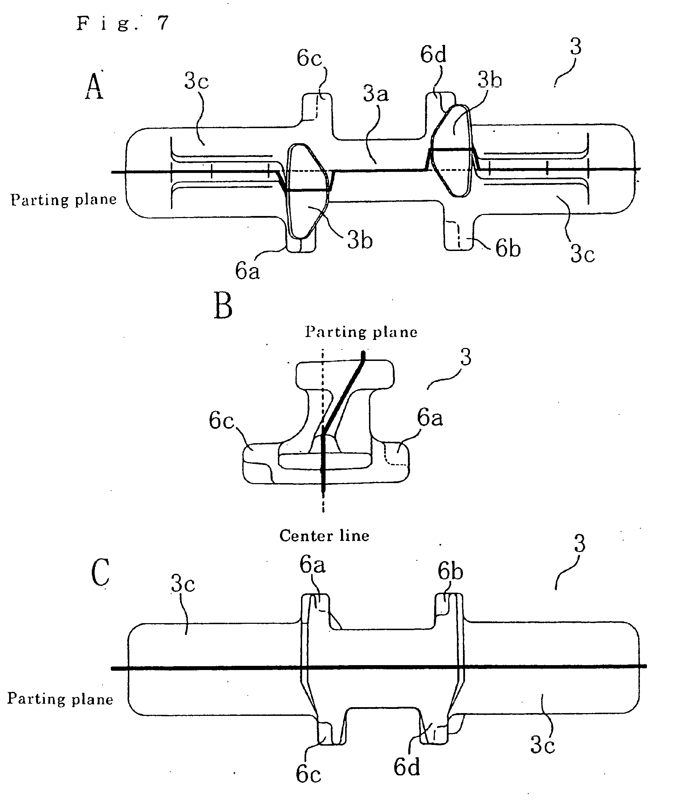

Fig. 7 is an explaining view of a core metal showing a parting plane of a mold for producing the core metal of the first embodiment. Fig. 7A is a plane view of the anti-tread side of the core metal embedded in the rubber crawler track, Fig. 7B is a side view and Fig. 7C is a plane view of the tread side.
In the first embodiment, the left and right guide protrusions of the core metal are shifted in the circumferential direction so as to be arranged in zigzag as shown in Fig. 1C and Fig. 3A. Therefore, as shown in Fig. 7, the parting plane of the mold is laterally shifted at the guide protrusion side.
According to this, the height of the guide protrusion top on the central line of the core metal in the crawler longitudinal direction can be lowered, and the shape of the rolling plane is formed by the left and right guide protrusions in the core metal longitudinal direction. Therefore, even core metal with the horizontal protrusions can prevent the travelling vibration.

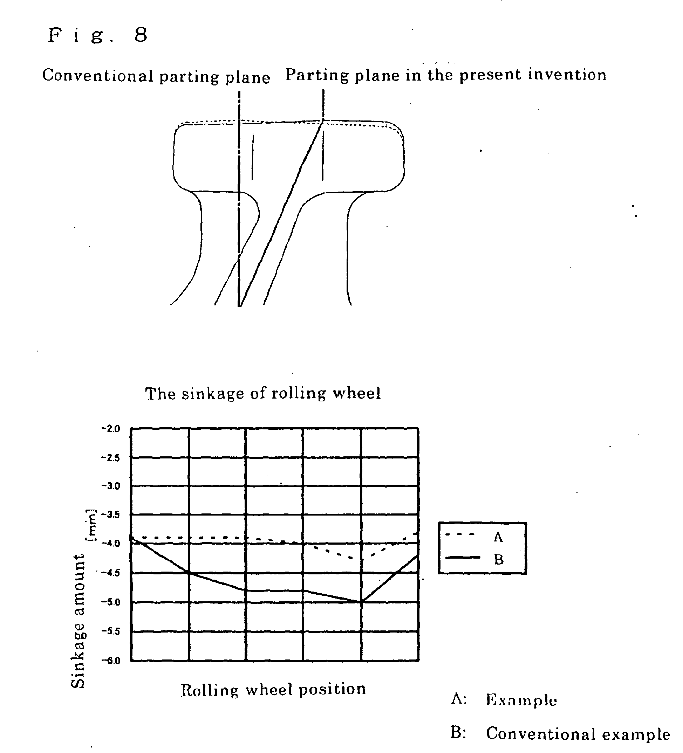

Fig. 8 is a graph view showing the rolling-wheel sinkage of the conventional core metal and the core metal of the present invention. The conventional core metal is produced by a conventional mold parting laterally, the guide protrusion top forming trimming taper from the center. A mold used in the present invention is formed so as to shift the left and right guide protrusions longitudinally in the crawler circumferential direction and so as to shift the parting plane laterally at the guide protrusion side.
As shown in Fig. 8, the sinkage varies greatly in the core metal whose guide protrusion top forms the trimming taper because the rolling wheel sinks near the center of the guide protrusion most and does not sink much at the ends. On the other hand, in the core metal produced by the mold in the present invention, the sinkage is almost equal.
In this way, the invention of the first embodiment can prevent the traveling vibration suitably.

### EXAMPLE 2

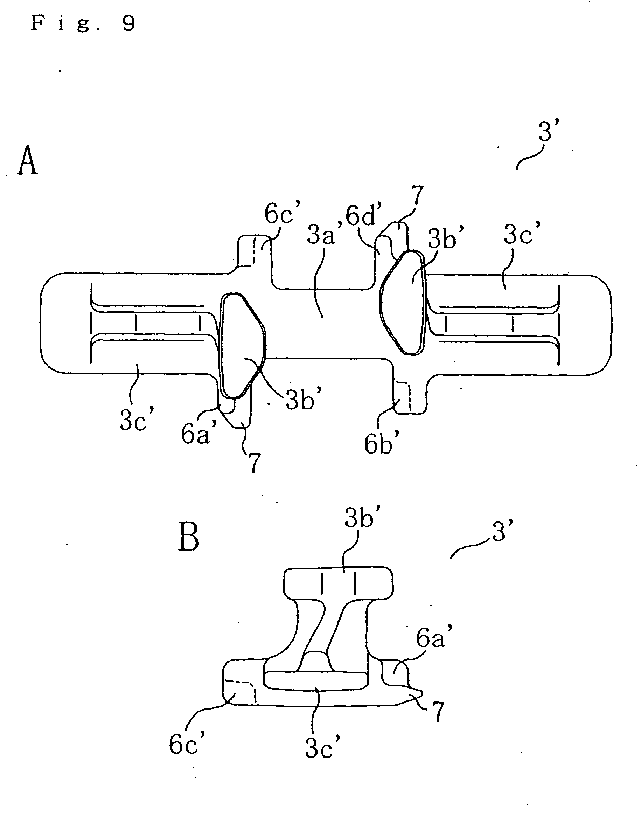

Fig. 9 shows a core metal 3' embedded in the rubber crawler body of the second embodiment. Fig. 9A is a plane view of the anti-tread side, and Fig. 9B is a side view.
The core metal 3' has a tapered horn portion 7 on an end of the horizontal protrusion of one side in the crawler circumferential direction (core metal width direction). When the core metal 3' is embedded in the rubber crawler body, the ends of the horizontal protrusions 6' facing between the adjacent core metals in the crawler circumferential direction overlap within the fixed length in the crawler width direction and in the crawler thickness directions. In this case, only one of the horizontal protrusions has the horn portion 7.
The core metal 3' in Fig. 9 will be explained. The horn portion 7 is provided to the horizontal protrusion 6a', not provided to the horizontal protrusion 6c' of the opposite side plane in the core metal width direction as shown in Fig. 9A. And, it is not provided to the horizontal protrusion 6b' opposite to the core metal 3' longitudinal direction but provided to the horizontal protrusion 6d' of the point symmetry side.

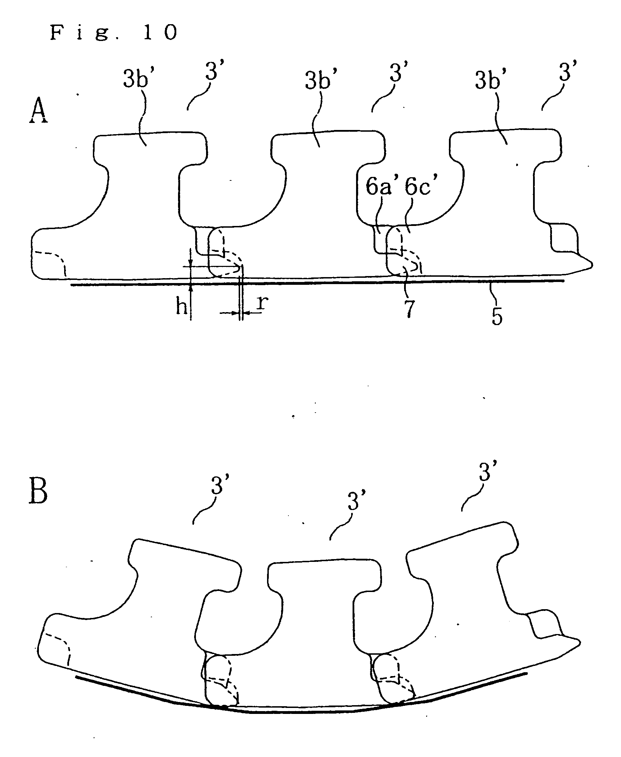

Fig. 10 is a view for explaining the horizontal protrusions between the adjacent core metals 3' of the second embodiment. Fig. 10A is an explanation view of the side plane showing the relation of the adjacent core metals while the crawler track contacts on the ground (in a horizontal state). Fig. 10B is an explanation view of the side plane showing the relation of the adjacent core metals while the crawler track is wound up to the idler and the sprocket of the traveling device.
As shown in Fig, 10B, the horn portions do not interfere to the core metal adjacent to the horizontal protrusion when the crawler track is wound up to the idler and the sprocket. Accordingly, as shown in Fig. 10A, it is possible to shorten the distance between the horn portion 7 and the adjacent core metal so that the crawler track contacts on the ground. As a result, the overlap length of the horizontal protrusions between the adjacent core metals is enlarged to keep the overlap of the horizontal protrusion. Therefore, the crawler track is prevented from getting off.

It is not preferable to arrange the bottom end of the tread side of the horizontal protrusion from the steel cord layer to the further tread side because the rubber portion of the horizontal protrusion is damaged by the ground.
In case the horizontal protrusion is provided to the tread side than the core metal bottom, the thickness portion may be provided to the core metal bottom portion.

## Claims

1. A rubber crawler track (1) to be driven by a driving device, the rubber crawler track (1) comprising:
a rubber crawler body (2) shaped as an endless belt made of rubber elastic body;
a layer comprising a majority of steel cords (5) embedded in said rubber crawler body (2); and
core metals (3,3') embedded in said rubber crawler body (2) at a fixed interval in a crawler circumferential direction,
each of said core metals (3,3') comprising:
an engaging portion (3a, 3a') formed at the center of a core metal length direction;
guide protrusions (3b, 3b') for preventing wheel run-off;
wing portions (3c),
said guide protrusions (3b, 3b') and said wing portions (3c) formed at both sides of the engaging portion; (3a, 3a') and
horizontal protrusions (6) formed to side planes of the core metal (3, 3') in a width of at least one of the both sides of said engaging direction of at least one of the both sides of said engaging portion (3a, 3a') said horizontal between adjacent core the crawler horizontal protrusions (6) facing between adjacent core metals is (3, 3') in the crawler circumferential direction are overlapped within a fixed length of their ends in a crawler width direction and in a crawler thickness direction;
**characterized in that** a distance "r" in the crawler circumferential direction between the ends of the horizontal protrusions is expressed as Δ r≦r≦2 Δ r when the rubber crawler track is horizontal, wherein Δr = 2πh/n, where h is a distance from the steel cord layer to the horizontal protrusion (6) and n is the number of sprocket teeth of the driving device.

2. A rubber crawler track (1) according to claim 1, **characterized in that**
a tapered horn portion (7) is provided to an end of the horizontal protrusion (6) of one side of the adjacent core metals.

3. A rubber crawler track as claimed in claim 1 or claim 2, wherein the left and right guide protrusions (3b) of the core metals (3) embedded in the rubber crawler track are shifted in the circumferential direction so as to be arranged in zigzag, and the highest positions of said guide protrusions (3b) are shifted longitudinally from the center line of the core metals (3).

## Patentansprüche

1. Gummiraupenkette (1), die durch eine Antriebsvorrichtung anzutreiben ist, wobei die Gummiraupenkette (1) enthält;
einen Gummiraupenkettenkörper (2), der als ein endloser Riemen aus einem elastischen Gummikörper ausgeformt ist;
eine Schicht, die eine Mehrzahl an Stahlseilen (5) enthält, die in den Gummiraupenkettenkörper (2) eingebettet sind; und
Metallkerne (3, 3') die im Gummiraupenkettenkörper (2) in einem bestimmten Abstand in einer Umfangsrichtung der Raupenkette eingebettet sind,
wobei jeder der Metallkerne (3, 3') enthält:
einen Eingriffsbereich (3a, 3a'), der am Zentrum einer Längsrichtung eines Metallkerns ausgebildet ist;
Führungsvorsprünge (3b, 3b') um ein Entgleisen der Räder zu verhindern;
Flügelbereiche (3c),
wobei die Führungsvorsprünge (3b, 3b') und die Flügelbereiche (3c) an beiden Seiten des Eingriffsbereichs (3a, 3a') ausgebildet sind; und
horizontale Vorsprünge (6), die an Seitenflächen des Metallkerns (3, 3') in einer Breitenrichtung von zumindest einer der beiden Seiten des Eingriffsbereichs (3a, 3a') ausgebildet sind,
wobei die horizontalen Vorsprünge (6), die zwischen benachbarten Metallkernen (3, 3') in die Raupenkettenumfangsrichtung zeigen, sich in einer bestimmten Länge ihrer Enden in einer Breitenrichtung der Raupenkette und in einer Dickenrichtung der Raupenkette überlappen;
**dadurch gekennzeichnet dass** ein Abstand "r" in der Raupenkettenumfangsrichtung zwischen den Enden der horizontalen Vorsprünge als Δ r≤r≤2 Δ r ausgedrückt wird, wenn die Gummiraupenkette horizontal ist, wobei Δ r = 2 π h/n, wobei h ein Abstand von der Stahlseilschicht zum horizontalen Vorsprung (6) ist, und n die Anzahl von Kettenzähnen der Antriebsvorrichtung ist.

2. Gummiraupenkette (1) nach Anspruch 1, **dadurch gekennzeichnet, dass** ein kegelförmiger Hornbereich (7) an einem Ende des horizontalen Vorsprungs (6) von einer Seite der benachbarten Metallkerne vorgesehen ist.

3. Gummiraupenkette nach Anspruch 1 oder 2, wobei die linken und rechten Führungsvorsprünge (3b) der Metallkerne (3), die in der Gummiraupenkette eingebettet sind, so in der Umfangsrichtung verschoben sind, dass sie im Zickzack angeordnet sind, und die höchsten Positionen der Führungsvorsprünge (3b) in der Längsrichtung von der Mittellinie der Metallkerne (3) verschoben sind.

## Revendications

1. Chenille en caoutchouc (1) destinée à être entraînée par un dispositif d'entraînement, la chenille en caoutchouc (1) comprenant :
un corps de chenille (2) configuré comme une courroie sans fin formée par un corps élastique en caoutchouc ;
une couche comprenant une majorité de cordes en acier (5) noyées dans ledit corps de chenille en caoutchouc (2) ; et
des noyaux métalliques (3, 3') noyés dans ledit corps de chenille en caoutchouc (2) à un intervalle fixe dans la direction circonférentielle de la chenille,
chacun des noyaux métalliques (3, 3') comprenant :
une portion d'engagement (3a, 3a') formée au centre d'une direction longitudinale de noyau métallique ;
des saillies de guidage (3b, 3b') pour empêcher le déraillement des roues ;
des portions d'ailette (3c),
lesdites saillies de guidage (3b, 3b') et lesdites portions d'ailette (3c) étant formées aux deux côtés de la portion d'engagement (3a, 3a') ; et
des saillies horizontales (6) formées aux plans latéraux du noyau métallique (3, 3') dans le sens de la largeur sur au moins un des deux côtés de ladite portion d'engagement (3a, 3a'), lesdites saillies horizontales (6) orientées entre les noyaux métalliques adjacents (3, 3') dans la direction circonférentielle de la chenille se chevauchent sur une longueur fixe de leurs extrémités dans le sens de la largeur de la chenille et dans le sens de l'épaisseur de la chenille ;
**caractérisée en ce qu'**une distance « r » dans la direction circonférentielle de la chenille entre les extrémités des saillies horizontales est exprimée par Δr≤r2Δr lorsque la chenille en caoutchouc est horizontale, où Δr=2IIh/n, où h est une distance de la couche de cordes en acier à la saillie horizontale (6) et n représente le nombre de dents d'entraînement du dispositif d'entraînement.

2. Chenille en caoutchouc (1) selon la revendication 1, **caractérisée en ce qu'**une portion de corne conique (7) est réalisée à une extrémité de la saillie horizontale (6) d'un côté des noyaux métalliques adjacents.

3. Chenille en caoutchouc selon la revendication 1 ou la revendication 2, où les saillies de guidage gauche et droite (3b) des noyaux métalliques (3) noyés dans la chenille en caoutchouc sont décalés dans la direction circonférentielle pour être agencées en zig zag, et les positions les plus élevées desdites saillies de guidage (3b) étant décalées longitudinalement de la ligne centrale des noyaux métalliques (3).
